# EUROPEAN PATENT APPLICATION

(11) **EP 0 875 822 A2**
(43) Date of publication of application: **04.11.1998**
(21) Application number: 98303034.7
(22) Date of filing: 21.04.1998
(51) Int. Cl.: G06F 7/52

(54) **Method for providing pure carry-save output for multiplier**

(30) Priority: 30.04.1997 US 841743
(71) Applicant: LUCENT TECHNOLOGIES INC., Murray Hill, New Jersey 07974-0636 (US)
(72) Inventor: Raghunath, Kalavai Janardhan, Chatham, New Jersey 07928 (US)
(74) Representative: Watts, Christopher Malcolm Kelway, Dr.

(57) **Abstract**

A method is described for realizing a pure carry-save output from a two's complement carry-save multiplier. In particular, that method provides for causing each partial product, and a sum of all partial products in a two's-complement carry-save multiplier to be in pure carry-save form. The method includes the addition of sign extension bits to each partial product of the multiplier to achieve such pure carry-save form.

## Description

### Field of the Invention

This application is related to the art of automated processing of numerical data, and more particularly to an improved method for implementing carry-save multiplication in such processing.

### Background of the Invention

In the art of automated processing of numerical data, as typically carried out in a digital computer, a number of techniques have evolved over the past few decades for reducing the processing time for a given operation, or for accomplishing a given level of processing with lesser hardware complexity, or both. Among such techniques are the use of carry-save architecture for simplifying digital adders and multipliers and the representation of numbers in the two's-complement form to avoid problems of dealing with negative numbers. Each of these techniques is routinely used in the numerical processing carried out by modern digital computers.

Two's-complement multipliers using carry-save architecture are well known in the art of automated number processing -- one of the most popular of which being based on an algorithm developed in 1951 by Andrew Booth, and known as a Booth multiplier. In such a carry-save multiplier, internal processing is carried out in carry-save form, but its output is converted back to "binary" form through a merger of the "carry" term and the "sum" term for each bit of the product. In many instances, however, it would be desirable to carry the multiplier output forward to another process in its carry-save form. While it is possible to extract an output from a carry-save multiplier prior to the merge operation, which output would be in a nominal carry-save form, such an output is not a pure carry-save output and its use can lead to errors in the further processing. In particular, such a pseudo carry-save output does not reliably permit the detection of an overflow condition or the performance of a saturation operation. Similarly, It is not possible to reliably do sign extension with such a pseudo carry-save output.

### Summary of Invention

It is accordingly an object of the invention to provide a method for realizing a pure carry-save output from a two's complement carry-save multiplier. To that end, a method is provided for causing each partial product, and a sum of all partial products in a two's-complement carry-save multiplier to be in pure carry-save form. That method includes the addition of sign extension bits to each partial product of the multiplier to achieve such pure carry-save form.

### Brief Description of the Drawings

Figure 1 illustrates in schematic form a typical prior-art Booth multiplier using carry-save architecture.

Figure 2 shows the decoded partial products for a Booth-multiplier modified according to the method of the invention.

Figure 3 shows the carry-save add section of an exemplary 12 x 10 Booth multiplier implemented according to the method of the invention.

### Detailed Description of Invention

The discussion following will be presented partly in terms of algorithms and symbolic representations of operations on data bits within a computer system. As will be understood, these algorithmic descriptions and representations are a means ordinarily used by those skilled in the computer processing arts to convey the substance of their work to others skilled in the art.

As used herein (and generally) an algorithm may be seen as a self-contained sequence of steps leading to a desired result. These steps generally involve manipulations of physical quantities. Usually, though not necessarily, these quantities take the form of electrical or magnetic signals capable of being stored, transferred, combined, compared and otherwise manipulated. For convenience of reference, as well as to comport with common usage, these signals will be described from time to time in terms of bits, values, elements, symbols, characters, terms, numbers, or the like. However, it should be emphasized that these and similar terms are to be associated with the appropriate physical quantities - such terms being merely convenient labels applied to those quantities.

A starting point for any consideration of machine processing of numerical data is a determination of the form in which the data will be presented. To begin, a numbering system must be chosen. Historically, machine processing of numbers has been related to numbers represented in base 2 (binary), 8 (octal), 10 (decimal) and 16 (hexadecimal). Because the binary numbering system has become the overwhelming choice for contemporary machine processing of numerical data, that system will be used herein to illustrate the methodology of the invention. It should, however, be apparent to those skilled in the art that the inventive method can readily be extended to other numbering systems.

Consideration must also be given to the way negative numbers are represented and operated on in the performance of arithmetic operations by the automated processing system. While traditional *sign and magnitude* representation *(i. e.,* absolute value of the number in question along with a sign indicating whether it is positive of negative, with the positive sign usually being implied) could be used, this representational form is difficult (and expensive) to implement for machine processing. Accordingly, it has become common to use complements of numbers for the arithmetic processes carried out on such an automated basis, along with an additional bit (usually in the most significant bit position) indicative of the sign of the number in question. The means for processing numbers in complement form, as well as the advantages attendant to the use of complements, are well known and will not be discussed further here.

Two kinds of complements are in general use: *radix* complements and *diminished radix* complements, where *radix* refers to the base of the number system being used. For numbers expressed in the binary system, the *diminished radix* complement is known as the one's-complement and is formed by complementing each bit in the binary number under consideration *(i.e.,* changing all "1"s to "0"s and vice versa). The *radix* complement in binary is known as the two's-complement, and is formed by adding "1" to the one's-complement of the number. It is known to those skilled in the art that the described methods for forming the one's-complement and the two's-complement are shortcut methods which are largely unique to binary numbers; the theoretical basis for developing such complements for any number system are well known and discussion thereof is not warranted for the explanation here of the methodology of the invention.

Largely because the one's-complement has two representations for the value of zero, and two's-complement has a unique representation of zero, two's-complement representation has become the predominant choice for representing numerical values in machine processing applications. Accordingly, two's-complement representation will be used to illustrate the methodology of the invention and may be considered as being a part of the preferred embodiment of the invention. However, it should be apparent to those skilled in the art of the invention that the methodology disclosed herein may readily be extended to other complementary forms.

The fundamental arithmetic operation carried out for machine processing of numerical data is that of addition, which is implemented in the machine process by a logical device known as an *adder.* Each adder processes one bit for up to three numerical values to be added. For more efficient operation, such adders are usually staged in parallel (the number of such parallel adders being at least equal to the number of bits in numbers to be added) with the result that all bits in the numbers being added are processed simultaneously. Such parallel adders must of course deal with the *carry* from one bit position to another, and a variety of parallel adder configurations have been developed to address this requirement. Among the most notable of such parallel adder configurations are the *ripple adder,* the *carry look-ahead adder,* and the *carry-save adder.* All of these parallel adder configurations are well known in the art and, except for the *carry-save adder* which forms a part of the preferred embodiment of the invention, will not be discussed further here.

The *carry-save adder* has been found to provide significant advantage in both processing time and hardware complexity over the *ripple adder* and the *carry look-ahead adder.* Accordingly it has become the parallel adder of choice for most machine processing applications. Essentially, the unique feature of the *carry-save adder* can be described as follows. While other parallel adders must propagate a *carry* produced by a summation at a bit position through all bits to the left of that bit position, the *carry-save adder* instead provides two output terms for each set of bits added, a *sum* term and a *carry* term. The *carry* terms for each bit position are sent downward (in parallel and shifted one bit position to the left) to another stage as another *n*-bit number *(n* being the number of bits in the numbers being added). The "subtotals" of the *sum* terms and the *carry* terms are then added to produce the total for the addition operation. The primary advantage of the *carry-save adder* is realized in the multiplication operation and will be discussed further in that context.

The operation of multiplication in machine processing (as in paper and pencil processing) is fundamentally that of multiplying each bit in the multiplier by all bits in the multiplicand. For numbers expressed in the binary system, each bit will be either a "1" or a "0", and thus the partial products corresponding to each multiplier bit will have a "0" in each bit position when the multiplier bit is "0", and will have the same value as each bit of the multiplicand (either "1" or "0") when the multiplier bit is "1". Those partial products, which are of course shifted one bit position to the left for each bit in the multiplier processed, are then added to arrive at the product for the multiplication of the multiplicand and the multiplier. With the use of *carry-save adders,* each summation of a partial product and a preceding term will be expressed in carry-save format *(i.e.,* each bit position will have both a *sum* term and a *carry* term). The *carry* and *sum* terms are added in parallel through all of the partial products and the product of the multiplication is determined as a "grand total" of the total of the *sum* terms through all partial products and the total of the *carry* terms through all partial products (shifted one bit to the left relative to the *sum* total). It has been found that application of the carry-save method for addition of the partial products in such multiplication operations results in considerable savings in processing time. Accordingly, this method is commonly used for the multiplication operation in machine processing.

For machine implemented multiplication, improved processing time is also realized through the use of various algorithms which have been developed to exploit characteristics of the representational form and/or the multiplication process. Simple examples of such algorithms are: (1) the skipping of the step of producing a partial product for a "0" in the multiplier and shifting the next partial product by two bit positions -- thus eliminating a row of bit adders, along with the attendant savings of processing time, for each partial product skipped - and (2) looking for strings of "0"s, with corresponding multiple shifts for the next partial product. One of the most commonly used such multiplication algorithms is the Booth algorithm referenced in the Background section, particularly with a design modification known as the Nainidzu-Wang multiplier (see, N. Wang, *Digital MOS Integrated Circuits*: *Design for Applications,* Prentice Hall, 1989). That modified Booth multiplier will be used as an illustrative embodiment for the method of the invention. It should, however, be understood that the inventive methodology can readily be extended to other machine-process multiplication operations.

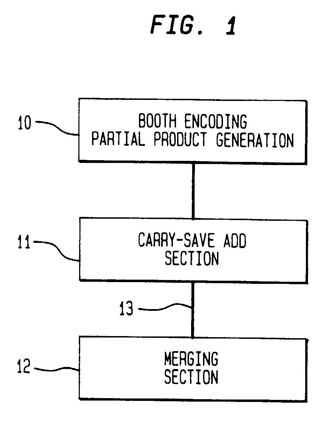

A two's-complement Booth multiplier using carry-save addition of the partial products is illustrated schematically in Figure 1. As will be seen in the figure, such a multiplier is functionally divided into three sections. In the top section **10**, the Booth encoding process is carried out and the partial products generated. The Booth encoding process is well known in the art and need not be further discussed other than to note that it typically results in a number of partial products which are approximately half the number of bits in the multiplier. In the second section (Carry-Save Add) **11** the partial products are added using the carry-save methodology, and in the final section (Merging) **12** the *sum* and *carry* terms for all of the partial products are merged to form a single value, which is the product of the multiplication.

As explained in the Background section, there are applications in the machine processing of numerical data where it is desired to transfer the output of such a multiplier forward to another function in the carry save format. While it is possible to extract an output from the multiplier at a point immediately preceding the Merging Section (shown at **13** in the figure), which will nominally be in carry-save format, that output is not in a pure carry-save form and is likely to result in error for the performance of certain functions, such as the detection of an overflow condition or the performance of a saturation operation. This problem results because the addition of the partial products in a prior art carry-save add section does not handle the implicit overflows at the MSB sign bits.

The method of the invention produces a modification of the Carry-Save Add process for such a multiplier such that the totals of the *carry* and *sum* terms for such an adder are in pure carry-save format, and thus can be used for other processes requiring such an output. In reaching that result, the invention makes use of a technique known as *sign extension.* Although that technique is well known to those skilled in the art, a brief review is provided hereafter.

As previously discussed, for machine processing, the sign for a number is typically represented by an extra bit in the most significant bit position for the number. The logic of the machine processor is such that this sign bit is not processed in the manner of the normal arithmetic operation being carried out for the number, but rather in such a way as to preserve the correct sign for the resultant of the arithmetic operation. Since these sign bits are not processed in the arithmetic operation, one or more such bits may be added to the left of the most significant bit position of a number with the same effect as adding zeros to the left of a number's most significant bit position. Indeed, for positive numbers (where the sign bit is a "0"), the process is identical, and for negative numbers, having a sign bit of "1", the treatment of negative sign bits by the processor is such that the value of the number "signed" is not changed by the addition of extra sign bits. Accordingly such *sign extension* is regularly used to equalize the number of bits in two numbers having unequal bit lengths, such equalization being desirable for various machine processing operations.

The method of the invention proceeds from the recognition by the inventor that the output of a carry-save add section of a multiplier (such as depicted in Figure 1) will be in pure carry-save form if each of the intermediate partial product sums are themselves in pure carry-save form. Realization of that objective *-- i.e.,* each of the intermediate partial product sums for the multiplier being in pure carry-save form -- follows from two key ideas:
(1) a pure carry-save sum for any two numbers can be realized by assuring that there will never be an overflow for that sum; and
(2) a sum of two numbers each *k* bits in length will be a maximum of *k +* 1 bits in length -- *e.g.,* a sum of two 11 bit numbers will be no more than 12 bits.
Using knowledge of (2), the resultant described in (1) is realized according to the method of the invention by using sign-extension bits to pre-extend each partial product to the maximum length expected for a sum of such partial products. Because sign-extension bits do not change the value of the number so extended, the resultant of the addition process is unchanged, but that resultant is thereby assured of being of the proper length to avoid an overflow. Such pre-extension of the partial products will typically require the addition of only one sign-extension bit per partial product, although in some cases, particularly the initial partial product generated, additional sign-extension bits are needed to equalize the length of that partial product with a subsequent partial product to which it is to be added.

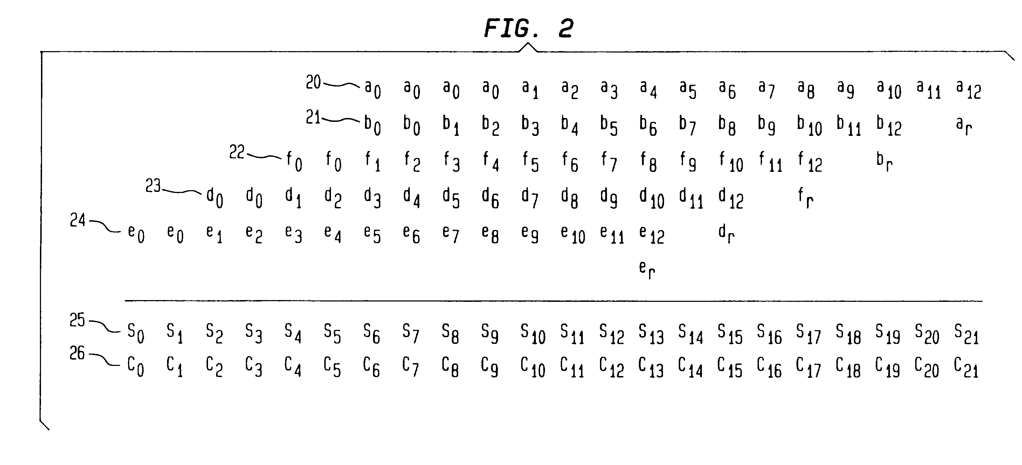

Application of the method of the invention is illustrated in Figure 2. In that figure, the partial products produced by the Booth encoding step for an exemplary 12 x 10 two's-complement Booth multiplier are shown along with sign extension bits added according to the method of the invention. The 5 partial products produced by Booth encoding are designated a₀, a₁, ... a₁₂; b₀, b₁, ... b₁₂; f₀, f₁, ... f₁₂; d₀, d₁, ... d₁₂; and e₀, e₁, ... e₁₂. (It is noted that for this and subsequent figures, the convention is followed of designating the most significant bit (MSB) with a "0" subscript, that bit also being the sign bit, and the least significant bit (LSB) with a subscript corresponding to the highest numbered bit in the multiplicand -- here "12".) Two's-complement Booth encoding also produces a *round* bit for each partial product to complete the two's-complement form, which *round* bits are shown in the figure with an "r" subscript.

Consider the "b" row of partial products (indicated in the figure by reference designator **21**) as being exemplary of the method of the invention. There, as can be seen, the partial product has been extended by the addition of one sign-extension bit, b₀. However, as will also be seen in the figure, the "a" row of partial products **20**, with which the "b" row is to be added, must be pre-extended not by just a single sign-extension bit, a₀, but also by an additional two such sign-extension bits (for a total of three sign-extension bits) because of the two bit position shift for each partial product inherent in the Booth encoding process, so as to maintain equivalent lengths for the added terms.

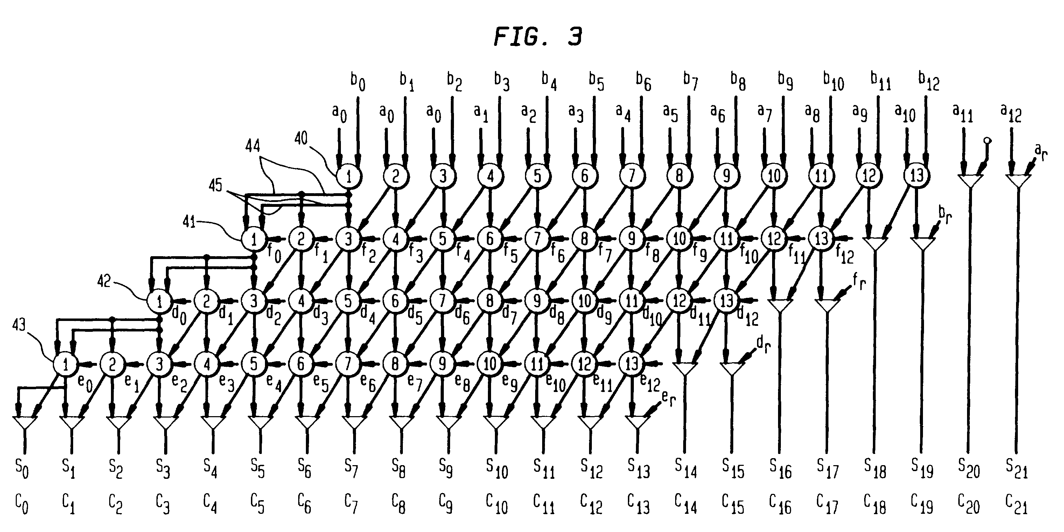

Now consider the "f" row of partial products **22**, which similarly will be pre-extended by one sign-extension bit, f₀, in accordance with the method of the invention. It will also be seen from the figure that, due to the Booth encoding shift, this term will be two bit positions longer than the sum of the "a" and "b" partial products. Thus, in principle, that sum of the "a" and "b" partial products would need to be pre-extended by an additional two sign-extension bits prior to being added to the "f" partial product. However, according to a further embodiment of the invention, this "Booth-shift" pre-extension is avoided, as well as for the sums to be added to the "d" and "e" partial products. This further embodiment will be understood with reference to Figure 3, which shows an implementation of a carry-save add section for a multiplier, according to the method of the invention.

Figure 3 shows 4 rows of bit adders (circles with numerals corresponding to bit position) which will be needed for the addition of the 5 partial products of Figure 2, and which are connected in a carry-save-add configuration. Each bit adder has 3 inputs, which as indicated in the figure are constituted as the partial product bits being added for a given adder stage (row), and two outputs, which represent the *sum* and *carry* terms for the bits added by that adder. At the output of the last bit adder for each bit position is a bus device (symbolized by ▼ and having two inputs and one output) which operates to convert the *carry* and *sum* terms for that bit position to separate *carry* and *sum* busses. The output of those busses will be the complete *sum* and *carry* terms as shown at **25** and **26** of Figure 2, as well as at the output of those bus devices in Figure 3.

Now, consider the second row of adders in Figure 3 (indicated by reference designator **41**). As shown in the figure by the inputs to the bit adders, this adder stage combines the "f" partial products (of Figure 2) with the *sum* and *carry* terms resulting from addition of the "a" and "b" partial products. Due, however, to the Booth-encoding shift, the "f" partial product bits are shifted two bit positions to the left of the resultant of adding the "a" and "b" partial products, and thus represents a number two bits greater in length than that resultant. This is shown in both the partial products of Figure 2 and by the upper two bit adders in the second adder stage **41** of Figure 3. But Figure 3 also shows how the invention avoids the necessity of adding two sign-extension bits to that resultant in order to provide equivalent length numbers for the addition process. Because the value of the *sum* and *carry* terms associated with the addition of such additional sign-extension bits is known to be the same as that for the first sign-extension bit added *(i.e.,* the sum of the a₀ and b₀ terms in the first adder stage **40** of Figure 3), the resultant values from addition of that first sign-extension bit can be bridged to the upper two bit adders in the second stage adder, as shown at **40** and **41**. This bridging process is repeated for adder stages 3 **42** and 4 **43** (or, more generally, all adder stages after the first stage) thus saving two bit adders per stage.

### Conclusion

An improved method for obtaining a pure carry-save output from a multiplier using carry-save addition has been disclosed and described. With the methodology of the invention, the sum for each partial product addition is caused to be in pure carry save form thereby avoiding any overflow in the carry-save form address. At each adder stage in such a multiplier, the partial product bits are appropriately extended, using sign-extension bits, such that there is no loss of information. With the method of the invention, there will be no overflows, either implicit or explicit, in the carry-save outputs of the adder stages, and thus the final output of the carry-save add section of the multiplier will be in pure carry-save form.

Although the present embodiment of the invention has been described in detail, it should be understood that various changes, alterations and substitutions can be made therein without departing from the spirit and scope of the invention as defined by the appended claims. In particular, while the methodology of the invention has been described in terms of a preferred embodiment using a two's-complement, carry-save Booth multiplier, the method can readily be extended to other carry-save multiplier implementations

## Claims

1. A method for achieving a pure carry save output from a multiplier comprising the steps of:
generating a set of partial products;
operating on said partial products to cause a resultant of an addition of a given partial product and a preceding term to be in pure carry save form; and
determining a *sum* term and a *carry* term resulting from iterative application of said operating step to said partial products.

2. The method of Claim 1 wherein said operating step is carried out by pre-extending each said partial product by use of sign-extension bits.

3. The method of Claim 2 wherein said pre-extension of said partial products is such that any said resultant of said addition of a given partial product and a preceding term has no overflow.

4. The method of Claim 2 wherein said pre-extension of said partial products is carried out by the addition of one sign-extension bit to each partial product but for an initial partial product.

5. The method of Claim 1 wherein said multiplier is based on two's-complement representation of values operated on.

6. The method of Claim 1 wherein said multiplier is configured as a Booth multiplier.

7. A carry-save multiplier configured to carry out the method of Claim 1.

8. The carry-save multiplier of Claim 13 wherein a *sum* term and a *carry* term resulting from an addition at a most significant bit (MSB) position for successive partial products generated by said multiplier are bridged to an input for a bit adder having as an input a bit from at least one higher order bit position of a succeeding partial product.

9. A machine implemented multiplier having a carry-save add portion, comprising:
means for generating a set of partial products;
means for operating on said partial products to cause a resultant of an addition by said carry-save add portion of a given partial product and a preceding term to be in pure carry save form; and
means for iteratively applying said means for operating to successive ones of said partial products.

10. The multiplier of Claim 9 wherein said operating means includes a means for pre-extending each said partial product by use of sign-extension bits.

11. The multiplier of Claim 9 wherein said pre-extension of said partial products is such that any said resultant of said addition of a given partial product and a preceding term has no overflow.

12. The multiplier of Claim 10 wherein said pre-extension of said partial products is carried out by the addition of one sign-extension bit to each partial product but for an initial partial product.

13. The improved multiplier of Claim 9 wherein said multiplier is based on two's-complement representation of values operated on.

14. The improved multiplier of Claim 9 wherein said multiplier is configured as a Booth multiplier.
